Europäisches Patentamt

European Patent Office

Office européen des brevets

(19)

(11) Numéro de publication : **0 131 508**
**B1**

(12) **FASCICULE DE BREVET EUROPÉEN**

(45) Date de publication du fascicule du brevet :
01.10.86

(51) Int. Cl.⁴ : **F 28 D 7/00// G21C1/02**

(21) Numéro de dépôt : **84401392.0**

(22) Date de dépôt : **29.06.84**

(54) Echangeur de chaleur comportant un dispositif de refroidissement auxiliaire.

(30) Priorité : 01.07.83 FR 8310993

(43) Date de publication de la demande :
16.01.85 Bulletin 85/03

(45) Mention de la délivrance du brevet :
01.10.86 Bulletin 86/40

(84) Etats contractants désignés :
**BE DE GB IT NL**

(56) Documents cités :
EP-A- 0 041 452
FR-A- 2 183 092
FR-A- 2 203 496
US-A- 4 286 366

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Arene, Gilbert**
**Lotissement Le Clos Vert Route de la Loubière**
**F-84120 Pertuis (FR)**
Inventeur : **Artaud, Robert**
**9, Avenue Claude Debussy**
**F-13100 Aix en Provence (FR)**
Inventeur : **Renaux, Charley**
**Les Extrées**
**F-13490 Jouques (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

EP 0 131 508 B1

## Description

L'invention concerne un échangeur de chaleur comprenant une enveloppe verticale, des tubes de transfert de chaleur montés dans cette enveloppe, des fenêtres d'entrée et de sortie pour conduire un caloporteur primaire circulant entre ces tubes, et des collecteurs d'entrée et de sortie pour conduire un caloporteur secondaire à l'intérieur des tubes, ledit échangeur comportant un dispositif auxiliaire de refroidissement entourant les tubes de transfert de chaleur pour refroidir le caloporteur primaire quand il n'est pas en circulation forcée, ce qui donne naissance à une circulation naturelle de ce caloporteur primaire vers le bas.

Un tel échangeur de chaleur est destiné, par exemple, à extraire, d'une part, les calories produites par le cœur d'un réacteur nucléaire en fonctionnement normal, et, d'autre part, la puissance résiduelle lors d'un accident d'arrêt des pompes de ce réacteur.

Les réacteurs nucléaires existants utilisent des échangeurs de chaleur qui ne comportent pas de dispositif de refroidissement auxiliaire intégré. Certaines réalisations de réacteurs nucléaires à neutrons rapides, par exemple Super Phénix, sont pourvues de dispositifs de refroidissement du réacteur à l'arrêt, nettement séparés des échangeurs de chaleur. Ces dispositifs présentent le double inconvénient de nécessiter des passages supplémentaires dans la dalle du réacteur, et, de ne pas être situés dans le circuit de convection naturelle passant par le cœur du réacteur, et donc, d'avoir une efficacité assez réduite.

Le brevet FR-A-2 374 609 décrit cependant un échangeur de chaleur contenant un système de refroidissement auxiliaire intégré.

Dans cet échangeur, l'enroulement de refroidissement auxiliaire n'est pas placé dans le circuit de sodium primaire mais dans une cavité entourant le faisceau de tubes de l'échangeur. Il est donc en dérivation du circuit de sodium primaire. Son efficacité en convection naturelle est limitée par l'effet de dérivation. Elle est donc assez faible.

La présente invention a pour but de remédier à cet inconvénient : elle résout le problème consistant à créer un échangeur de chaleur comportant un dispositif de refroidissement auxiliaire dont l'efficacité en convection naturelle est améliorée.

Selon l'invention, ce résultat est obtenu par le fait que ledit dispositif de refroidissement auxiliaire est situé dans la fenêtre d'entrée de l'échangeur, et qu'une virole, dite virole de garde, entoure le dispositif de refroidissement auxiliaire, cette virole étant ouverte à sa partie supérieure et raccordée à l'enveloppe de l'échangeur à sa partie inférieure.

Les avantages obtenus grâce à cette invention consistent essentiellement en ceci que l'amorçage de la circulation du sodium primaire par convection naturelle est facilité. Le sodium refroidi sur les faisceaux d'échange du dispositif de refroidissement auxiliaire descend dans l'échangeur. Il ne peut que descendre vers le collecteur froid pour remonter ensuite vers le cœur du réacteur où il se réchauffe en évacuant la puissance résiduelle. Le dispositif de refroidissement auxiliaire a donc une efficacité maximale pour évacuer la puissance résiduelle du réacteur arrêté.

L'invention est exposée ci-après plus en détail à l'aide de dessins représentant plusieurs modes d'exécution.

la figure 1 est une vue générale, partiellement en coupe, d'un échangeur de chaleur réalisé conformément à la présente invention,

la figure 2a est une vue partielle, en coupe de l'échangeur de chaleur de la figure 1,

la figure 2b est une vue de dessus en section de l'échangeur de la figure 2a,

les figures 3 et 4 représentent respectivement une vue en section longitudinale et une vue en plan de la ceinture anti-vibratoire,

les figures 5 à 8 représentent plusieurs variantes de réalisation de cet échangeur.

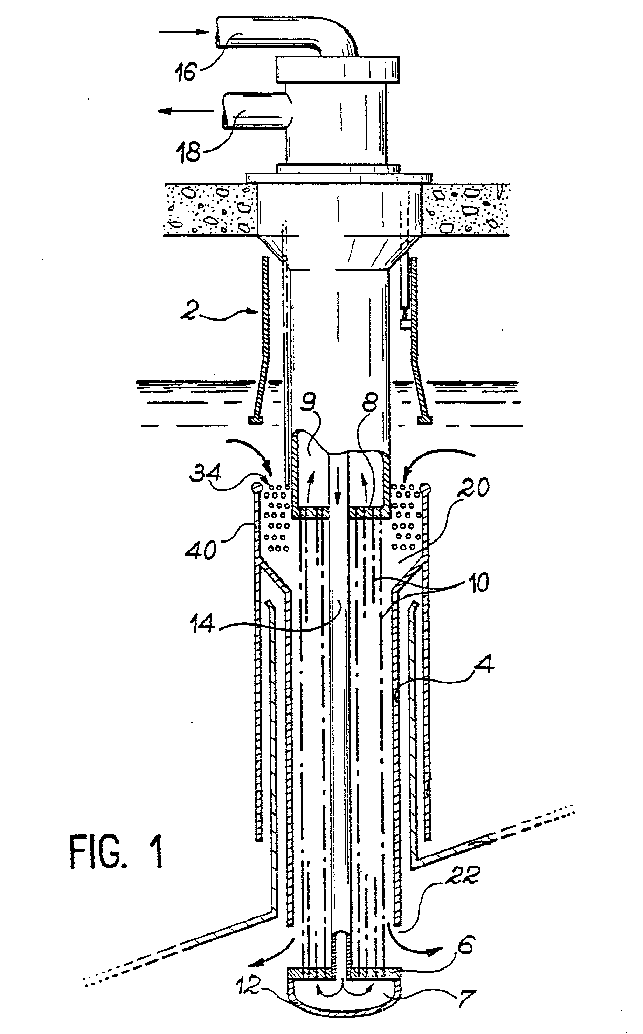

L'échangeur de chaleur de l'invention représenté sur la figure 1 comporte un dispositif de refroidissement auxiliaire situé dans le circuit du sodium primaire qui permet une évacuation optimale de la puissance résiduelle du cœur lorsque le réacteur est à l'arrêt. L'échangeur 2 comprend une enveloppe externe 4 qui canalise le fluide caloporteur primaire, une plaque à tubes inférieure 6 et une plaque à tubes supérieure 8. Entre la plaque 6 et la plaque 8 s'étend un faisceau de tubes rectilignes 10 fixés à chacune de leurs extrémités dans les plaques 6 et 8. A sa partie inférieure, l'échangeur 2 comporte un fond 12 qui détermine avec la plaque à tubes 6 un collecteur d'entrée 7 pour un fluide caloporteur secondaire. Au-dessus de la plaque à tubes 8 se trouve un collecteur de sortie 9 pour ce même fluide caloporteur.

En outre, les plaques à tubes 6 et 8 sont percées en leur centre pour laisser passage à un tube central 14 relié à une conduite 16. Le collecteur de sortie, quant à lui, est relié à une conduite 18.

L'enveloppe 4 comporte une fenêtre d'entrée 20 située à proximité de la plaque à tubes 8. Elle comporte en outre une fenêtre de sortie 22 située au-dessus de la plaque à tubes 6.

Conformément à l'invention, l'échangeur 2 comporte un dispositif de refroidissement auxiliaire 34. Il est disposé, dans la fenêtre d'entrée, autour du collecteur de sortie du fluide caloporteur secondaire 9 et/ou de la partie supérieure du faisceau de tubes 10.

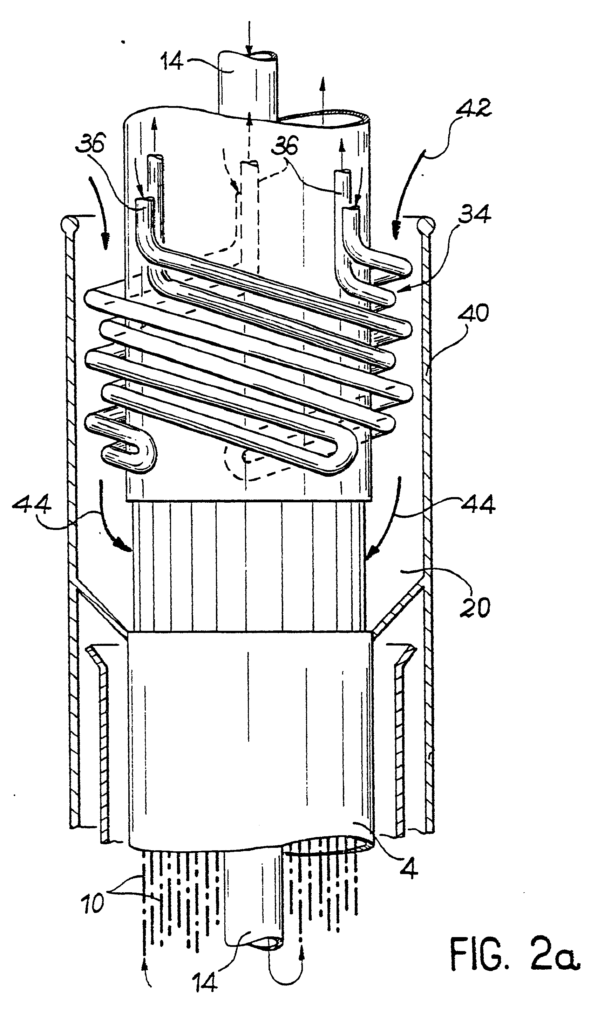

En outre, le dispositif comporte une virole 40 appelée « virole de garde » qui entoure la fenêtre 20 et le dispositif 34. La virole de garde a pour fonction de canaliser le sodium qui circule autour du dispositif 34 selon le sens des flèches 42 et 44 vers la fenêtre 20, comme représenté sur la figure 2a. En l'absence d'une virole de garde, l'efficacité du dispositif 34 serait réduite.

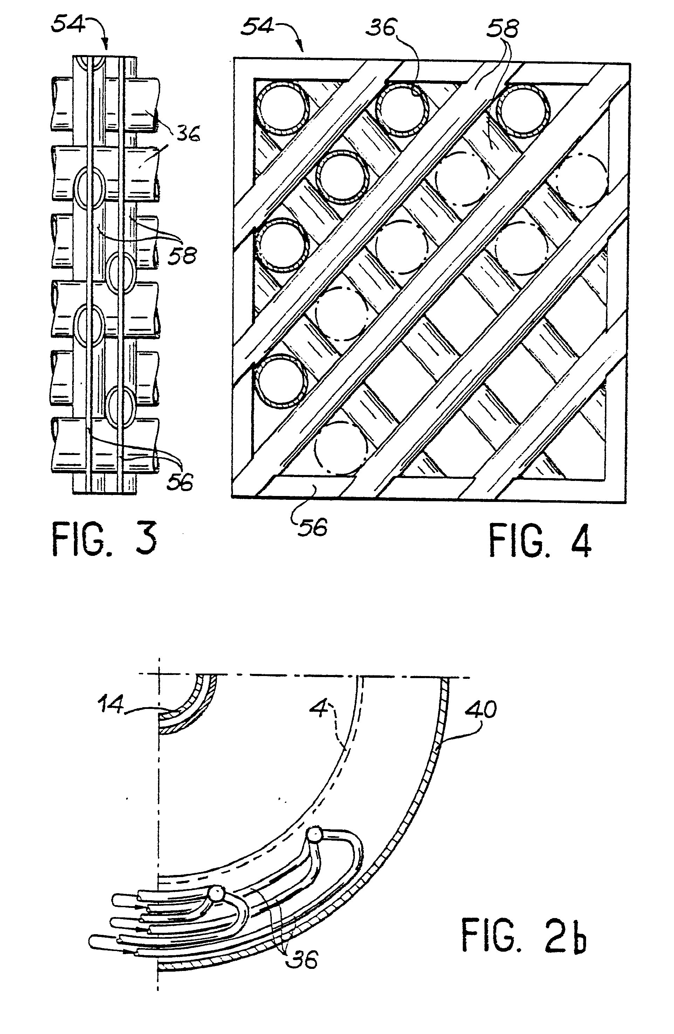

On a représenté sur la figure 2b une vue de dessus de l'échangeur de la figure 2a qui montre le système de collectage des tuyaux d'échange du dispositif 34.

On a représenté sur les figures 3 et 4 une réalisation de la ceinture anti-vibratoire. Cette ceinture 54 est constituée par un cadre rigide 56 et par un double réseau de barres croisées 58 qui emprisonnent les tubes 36 du dispositif auxiliaire de refroidissement. La ceinture anti-vibratoire 54 absorbe les vibrations des tubes en épingle mais ne s'oppose pas à leur dilatation.

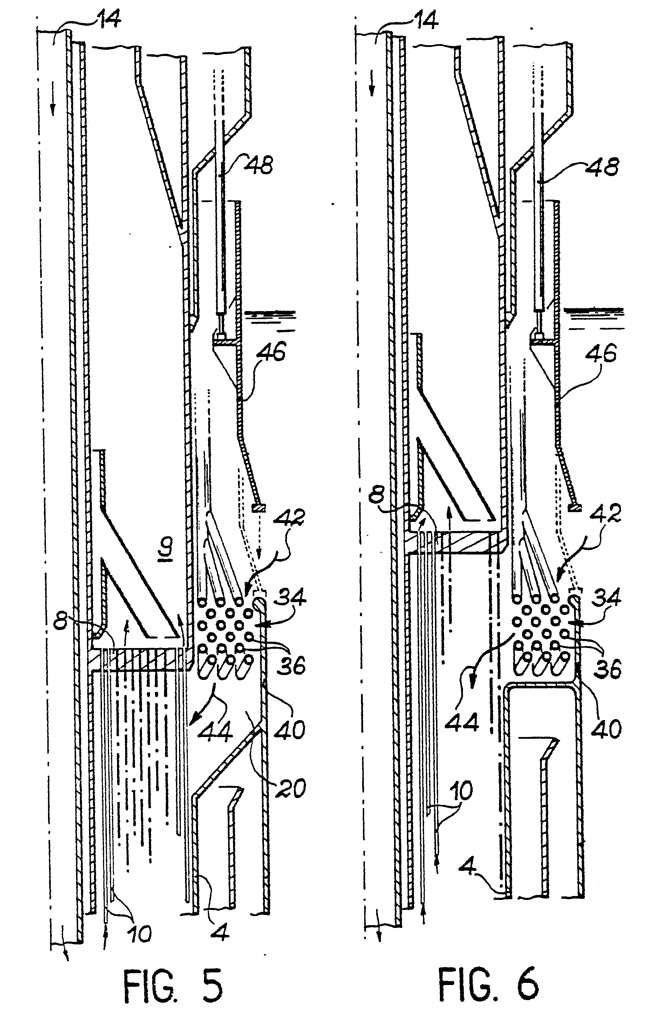

On a représenté sur la figure 5 une première réalisation particulière de l'échangeur de chaleur de l'invention. Dans cette réalisation, le dispositif auxiliaire de refroidissement 34 est situé, pour l'essentiel, au niveau du collecteur de sortie 9 du fluide caloporteur secondaire. Pendant le fonctionnement normal du réacteur, tout le débit de sodium passe sur le faisceau des tubes du dispositif auxiliaire de refroidissement. En conséquence, c'est dans cette variante de réalisation que l'efficacité en évacuation de la puissance résiduelle est maximale, mais la perte de charge est aussi la plus grande. Cependant, ceci n'est pas un inconvénient majeur car cette perte de charge supplémentaire est assez faible ; elle peut être facilement compensée en rajoutant une à deux couronnes de tubes 10 au faisceau de l'échangeur. De plus, le faisceau des tubes du dispositif de refroidissement auxiliaire 34 joue un rôle analogue à celui des chicanes habituellement utilisées pour uniformiser le courant du sodium dans l'échangeur intermédiaire. Il peut aussi jouer le rôle de mélangeur du sodium à son entrée dans l'échangeur, lorsque des stratifications se forment dans le collecteur chaud, comme c'est le cas quand le réacteur fonctionne à débit primaire partiel.

On remarque en outre sur la figure 5 un dispositif d'obturation 46 mû par un système de tringleries 48. Ce dispositif permet d'obturer un ou éventuellement plusieurs échangeurs de chaleur pendant le fonctionnement partiel de la chaudière nucléaire. On remarque que le dispositif de refroidissement auxiliaire 34 est compatible avec le système d'obturation de la fenêtre d'entrée 20 de l'échangeur.

On a représenté sur la figure 6 une deuxième réalisation particulière de l'échangeur de l'invention. Dans cette réalisation, le faisceau du dispositif de refroidissement auxiliaire est placé au bas de la fenêtre d'entrée 20 de l'échangeur. Pendant le fonctionnement normal du réacteur, la perte de charge est plus faible que dans le cas de la réalisation de la figure 5 car tout le débit primaire ne passe pas sur le faisceau.

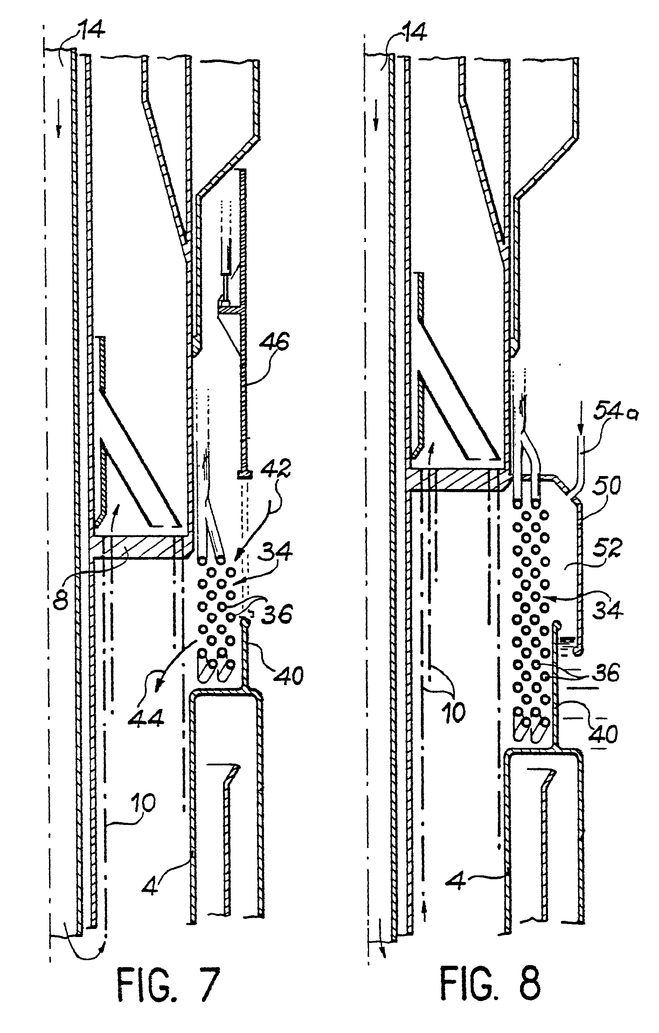

On a représenté sur la figure 7 une troisième réalisation particulière de l'échangeur de l'invention. Dans cette réalisation, le faisceau du dispositif auxiliaire de refroidissement occupe la totalité de la hauteur de la fenêtre 20 de l'échangeur.

Ceci permet de réduire la perte de charge par rapport à la réalisation de la figure 5. En fonctionnement d'évacuation de la puissance résiduelle, la totalité du flux de sodium primaire passe sur le faisceau du dispositif auxiliaire de refroidissement.

On a représenté sur la figure 8 une quatrième réalisation particulière de l'échangeur de l'invention qui comporte un obturateur pneumatique 50 de la fenêtre 20. Cet obturateur, qui a la même fonction que le dispositif 46 de la figure 5, est constitué par une cloche 50 qui permet d'emprisonner une bulle d'argon 52. Ce gaz est amené par la canalisation 54a raccordée à la cloche 50.

Les différents modes de réalisation de l'échangeur de chaleur, muni du dispositif de refroidissement auxiliaire, qui viennent d'être décrits, permettent de réduire les dimensions et le coût du réacteur. La solution préconisée par le brevet FR-A-2 374 609 présentait déjà cet avantage, mais grâce à la conception et à la position du faisceau de tubes en épingles du dispositif de refroidissement auxiliaire de la présente invention, son efficacité pour évacuer la puissance résiduelle est plus grande, et, de plus, l'intervention sur le faisceau de ce dispositif ne présente pas de difficulté ; enfin, sa structure compacte lui permet une bonne tenue aux vibrations et aux séismes.

**Revendications**

1. Echangeur de chaleur comprenant une enveloppe verticale (4), des tubes de transfert de chaleur (10) montés dans cette enveloppe (4), des fenêtres d'entrée (20) et de sortie (22) pour un caloporteur primaire s'écoulant entre les tubes (10), des collecteurs d'entrée (7) et de sortie (9) pour conduire un caloporteur secondaire à l'intérieur des tubes (10), et un dispositif auxiliaire de refroidissement (34), caractérisé en ce que ledit dispositif de refroidissement auxiliaire (34) est situé dans la fenêtre d'entrée (20), à l'intérieur d'une virole (40), dite virole de garde, cette virole étant ouverte à sa partie supérieure et raccordée à l'enveloppe (4) de l'échangeur à sa partie inférieure.

2. Echangeur selon la revendication 1, caractérisé en ce que le dispositif de refroidissement auxiliaire (34) est constitué par plusieurs tubes (36) en épingles enroulés autour du faisceau de tubes (10) de l'échangeur, les deux extrémités de ces tubes étant raccordées à un circuit de fluide caloporteur.

3. Echangeur selon la revendication 2, caractérisé en ce que les tubes (36) sont maintenus par une ceinture anti-vibratoire (54).

4. Echangeur de chaleur selon la revendication 3, caractérisé en ce que la ceinture anti-vibratoire (54) est constituée par un cadre rigide (56) supportant un double réseau de barres croisées (58) qui enserrent les tubes (36).

5. Echangeur de chaleur selon la revendication 1, caractérisé en ce que le dispositif de refroidissement auxiliaire (34) est situé au niveau du collecteur de sortie (9) du fluide caloporteur secondaire.

6. Echangeur de chaleur selon la revendication 1, caractérisé en ce que le dispositif de refroidissement auxiliaire (34) est situé au bas de la fenêtre d'entrée (20) de l'échangeur.

7. Echangeur de chaleur selon la revendication 1, caractérisé en ce que le dispositif de refroidissement auxiliaire (34) occupe la totalité de la hauteur de la fenêtre d'entrée (20) de l'échangeur.

8. Echangeur de chaleur selon la revendication 1, caractérisé en ce qu'il comporte un dispositif d'obturation pneumatique (50) de la fenêtre (20) de l'échangeur.

## Claims

1. Heat exchanger comprising a vertical jacket (4), heat transfer tubes (10) mounted in said jacket (4), an inlet port (20) and an outlet port (22) for a primary heat transfer fluid flowing between the tubes (10), an inlet manifold (7) and an outlet manifold (9) for a secondary heat transfer fluid flowing through the tubes (10), and an auxiliary cooling apparatus (34), characterised in that the said auxiliary cooling apparatus (34) is located in the inlet port (20) inside a ring (40), identified as the guard ring, said ring being open at its upper part and connected to the jacket (4) of the exchanger at its lower part.

2. Heat exchanger according to claim 1, characterised in that the auxiliary cooling apparatus (34) comprises a plurality of hairpin-bent tubes (36), wound around the bundle of tubes (10) of the exchanger, the two ends of said tubes being connected to a heat transfer fluid circuit.

3. Heat exchanger according to claim 2, characterised in that the tubes (36) are held by an anti-vibration belt (54).

4. Heat exchanger according to claim 3, characterised in that the anti-vibration belt (54) comprises a rigid frame (56) supporting a double grid of crossed rods (58) which surround the tubes (36).

5. Heat exchanger according to claim 1, characterised in that the auxiliary cooling apparatus (34) is located level with the outlet manifold (9) of the secondary heat transfer fluid.

6. Heat exchanger according to claim 1, characterised in that the auxiliary cooling apparatus (34) is located in the lower part of inlet port (20) of the exchanger.

7. Heat exchanger according to claim 1, characterised in that the auxiliary cooling apparatus (34) occupies the entire height of the inlet port (20) of the exchanger.

8. Heat exchanger according to claim 1, characterised in that it comprises a pneumatic closure means (50) for the port (20) of the exchanger.

## Patentansprüche

1. Wärmetauscher mit einem vertikalen Mantel (4), in diesem Mantel (4) angebrachten Wärmeübertragungsrohren (10), einem Eintrittsfenster (20) und einem Austrittsfenster (22) für einen Wärmeträger, der zwischen den Rohren (10) strömt, einem Eintrittssammler (7) und einem Austrittssammler (9), um einen sekundären Wärmeträger in das Innere der Rohre (10) zu führen, und einer Hilfskühlereinrichtung (34), dadurch gekennzeichnet, daß sich die Hilfskühlereinrichtung (34) in dem Eintrittsfenster (20) innerhalb eines Mantelringes (40), Schutzmantelring genannt, befindet, und daß dieser Mantelring an seinem oberen Abschnitt offen ist und an seinen unteren Abschnitt mit dem Mantel (4) des Wärmetauschers verbunden ist.

2. Wärmetauscher nach Anspruch 1, dadurch gekennzeichnet, daß die Hilfskühleinrichtung (34) von mehreren um das Bündel von Rohren (10) des Wärmetauschers herumgewickelten Haarnadelröhren (36) gebildet ist, wobei die zwei Enden dieser Röhren mit einem Wärmeträgerfluidkreislauf verbunden sind.

3. Wärmetauscher nach Anspruch 2, dadurch gekennzeichnet, daß die Röhren (36) von einem schwingungsfesten Ring (54) gehalten sind.

4. Wärmetauscher nach Anspruch 3, dadurch gekennzeichnet, daß der schwingungsfeste Ring (54) von einem steifen Rahmen (56) gebildet ist, der ein doppppeltes Gitter von gekreuzten Stangen (58) hält, die die Röhren (36) einzwängen.

5. Wärmetauscher nach Anspruch 1, dadurch gekennzeichnet, daß sich die Hilfskühleinrichtung (34) auf der Höhe des Ausgangssammlers (9) des sekundären Wärmeträgerfluids befindet.

6. Wärmetauscher nach Anspruch 1, dadurch gekennzeichnet, daß sich die Hilfskühleinrichtung (34) unterhalb des Eintrittsfensters (20) des Wärmetauschers befindet.

7. Wärmetauscher nach Anspruch 1, dadurch gekennzeichnet, daß die Hilfskühleinrichtung (34) die Gesamthöhe des Eintrittsfensters (20) des Wärmetauschers beansprucht.

8. Wärmetauscher nach Anspruch 1, dadurch gekennzeichnet, daß er eine pneumatische Schließvorrichtung (50) für das Fenster (20) des Wärmetauschers umfaßt.

FIG. 1

FIG. 2a

FIG. 3

FIG. 4

FIG. 2b

FIG. 5

FIG. 6

FIG. 7

FIG. 8